# EUROPEAN PATENT APPLICATION

(11) **EP 4 502 239 A1**
(43) Date of publication of application: **05.02.2025**
(21) Application number: 23780027.1
(22) Date of filing: 23.03.2023
(51) Int. Cl.: C25B 11/031, C04B 38/00, C25B 1/042, C25B 1/23, C25B 9/63, C25B 9/65, C25B 9/77

(54) **SOLID OXIDE ELECTROLYZER CELL, PRODUCTION METHOD FOR SOLID OXIDE ELECTROLYZER CELL, SOLID OXIDE ELECTROLYZER MODULE, ELECTROCHEMICAL DEVICE, AND ENERGY SYSTEM**

(30) Priority: 28.03.2022 JP 2022052171
(71) Applicant: Osaka Gas Co., Ltd., Osaka-shi, Osaka 541-0046 (JP)
(72) Inventor: TSUDA, Yuji, Osaka-shi, Osaka 541-0046 (JP); ECHIGO, Mitsuaki, Osaka-shi, Osaka 541-0046 (JP); OHNISHI, Hisao, Osaka-shi, Osaka 541-0046 (JP); MANABE, Kyohei, Osaka-shi, Osaka 541-0046 (JP)
(74) Representative: LBP Lemcke, Brommer & Partner Patentanwälte mbB
(86) International application number: PCT/JP2023/011459
(87) International publication number: WO 2023/190016

(57) **Abstract**

Provided is a solid oxide electrolysis cell in which the electrode layer thereof is prevented from peeling, and that has excellent strength (reliability), durability, and performance. A solid oxide electrolysis cell E includes at least: a first electrode layer 6; a second electrode layer 2; and an electrolyte layer 4 disposed between the first electrode layer 6 and the second electrode layer 2, wherein the first electrode layer 6 has at least a plurality of pores each having an area of 0.75 µm² or more in a vertical cross section thereof.

## Description

### Technical Field

The present invention relates to a solid oxide electrolysis cell, a method for manufacturing the same, and a solid oxide electrolysis module, an electrochemical device, and an energy system, each including the solid oxide electrolysis cell.

### Background Art

Non-Patent Document 1 discloses a solid oxide fuel cell (SOFC).

The solid oxide fuel cell disclosed in Non-Patent Document 1 is formed as follows. First, calcination is performed to form an anode electrode layer on a porous metal support obtained by sintering Fe-Cr based alloy powder. Next, an electrolyte layer made of yttria-stabilized zirconia (YSZ) is formed on the anode electrode layer, using an aerosol deposition technique (AD technique) without heating. Thereafter, a LSCF powder mixed with a PVDF (polyvinylidene fluoride) serving as a pore-forming material is layered on top of the electrolyte layer and heated to form a cathode electrode layer with a nano-sized porous structure.

### Prior Art Documents

### Non-Patent Documents

Non-Patent Document 1: Jong-Jin Choi and Dong-Soo Park, "Preparation of Metal-supported SOFC using Low Temperature Ceramic Coating Process", Proceedings of 11th European SOFC & SOE Forum, A1502, Chapter 09 - Session B15 - 14/117- 20/117 (1-4 July 2014)

### Disclosure of the Invention

### Problem to be Solved by the Invention

The solid oxide fuel cell described above functions as a power generating cell by causing a power generating reaction in an element portion constituted by the electrode layer, the electrolyte layer, etc. On the other hand, it is also possible to cause an electrolysis reaction, which is the reverse reaction of the power generating reaction, in the element portion, and in this case the solid oxide fuel cell functions as a solid oxide electrolysis cell (SOEC).

Here, when steam is electrolyzed using a solid oxide fuel cell-based solid oxide electrolysis cell, it is known that the reaction condition (thermal neutral point) where the heat absorption caused by water electrolysis and the heat generation caused by ohmic losses in the cell are balanced theoretically holds when the single cell voltage is 1.3 V Therefore, it is desirable for a system using a solid oxide electrolysis cell to be able to continue to operate near the thermal neutral point where heat dissipation to the outside or heat supply from the outside is not required, i.e., to operate with an applied voltage of approximately 1.3 V

However, solid oxide fuel cells are optimized for power generation applications. Therefore, when a solid oxide fuel cell is used as a solid oxide electrolysis cell, if a voltage of approximately 1.3 V is applied to cause an electrolysis reaction of steam or carbon dioxide, a large amount of oxygen is generated in the electrode layer, and there is a risk that the electrode layer will not be able to withstand the pressure of the generated oxygen. Specifically, when a large amount of oxygen is generated, the release of oxygen from the electrode layer cannot keep up with the generation of oxygen, causing the pressure inside the electrode layer to increase, resulting in the electrode layer peeling off the underlying layers such as the electrolyte layer, and damaging the cell, which is problematic.

The present invention has been made in consideration of the circumstances described above, and aims to provide a solid oxide electrolysis cell in which the electrode layer thereof is prevented from peeling, and that has excellent strength (reliability), durability, and performance, a method for manufacturing the same, and a solid oxide electrolysis module, an electrochemical device, and an energy system, each including the solid oxide electrolysis cell.

### Means for Solving Problem

A characteristic configuration for achieving the above-described object, of a solid oxide electrolysis cell according to the present invention lies in that
in a solid oxide electrolysis cell including at least: a first electrode layer; a second electrode layer; and an electrolyte layer disposed between the first electrode layer and the second electrode layer,
the first electrode layer has at least a plurality of pores each having an area of 0.75 µm² or more in a vertical cross section thereof.

With the above-described characteristic configuration, for example, even if a large amount of oxygen is generated in the first electrode layer, the presence of the plurality of pores each having an area of 0.75 µm² or more in the vertical cross section makes it easier for oxygen to be released from the first electrode layer and suppress the increase in pressure within the first electrode layer, thereby preventing the first electrode layer from peeling. Therefore, the solid oxide electrolysis cell has excellent strength (reliability), durability, and performance.

Another characteristic configuration of the solid oxide electrolysis cell according to the present invention lies in that
the first electrode layer has, in the vertical cross section thereof, at least a 10 pm square region in which three or more pores each having an area of 0.75 µm² or more are present.

With the above-described characteristic configuration, the number of pores each having an area of 0.75 µm² or more present in the first electrode layer is sufficient for the supply and release of gas involved in the electrolysis reaction, and the first electrode layer can be further prevented from peeling.

Another characteristic configuration of the solid oxide electrolysis cell according to the present invention lies in that
the pores each having an area of 0.75 µm² or more in the first electrode layer are pores each having a diameter of 0.5 pm or more.

The above-described characteristic configuration makes it easier for oxygen to be released from the first electrode layer and suppress the increase in pressure within the first electrode layer, thereby preventing the first electrode layer from peeling. Therefore, the solid oxide electrolysis cell has excellent strength (reliability), durability, and performance.

Another characteristic configuration of the solid oxide electrolysis cell according to the present invention lies in that
the first electrode layer has, in the vertical cross section thereof, at least a pore having an area of 0.04 µm² or less.

With the above-described characteristic configuration, the presence of both the pores on the order of micrometers and the pores on the order of nanometers not only makes it easier for gas to be released from the first electrode layer, but also increases the surface area compared to the case in which the first electrode layer only has pores on the order of micrometers, and therefore many electrochemical reaction fields can be secured in the first electrode layer. That is to say, with the above-described characteristic configuration, it is possible to prevent the first electrode layer from peeling while improving the performance of the electrolysis cell.

Another characteristic configuration of the solid oxide electrolysis cell according to the present invention lies in that
the pore having an area of 0.04 µm² or less in the first electrode layer is a pore having a diameter of 0.1 pm or less.

With the above-described characteristic configuration, as in the above case, the presence of both the pores on the order of micrometers and the pores on the order of nanometers not only makes it easier for gas to be released from the first electrode layer, but also increases the surface area compared to the case in which the first electrode layer only has pores on the order of micrometers, and therefore many electrochemical reaction fields can be secured in the first electrode layer. That is to say, with the above-described characteristic configuration, it is possible to prevent the first electrode layer from peeling while improving the performance of the electrolysis cell.

Another characteristic configuration of the solid oxide electrolysis cell according to the present invention lies in that
the first electrode layer has a vertical cross section in which a first porosity regarding the pores each having an area of 0.75 µm² or more is not less than 5% and less than 20%.

With the above-described characteristic configuration, the first electrode layer has a vertical cross section with a moderate first porosity of not less than 5% and less than 20% regarding the pores each having an area of 0.75 µm² or more. This makes it easier to supply and release gas involved in the electrolysis reaction from the first electrode layer while ensuring the strength of the first electrode layer, and makes it easier to prevent the first electrode layer from peeling.

Another characteristic configuration of the solid oxide electrolysis cell according to the present invention lies in that
the first electrode layer has a vertical cross section in which a second porosity regarding the pores each having an area of 0.75 µm² or more and the pore having an area of 0.04 µm² or less is not less than 10% and not more than 40%.

With the above-described characteristic configuration, the first electrode layer has a vertical cross section with a moderate second porosity of not less than 10% and not more than 40% regarding the pores each having an area of 0.75 µm² or more and the pores each having an area of 0.04 µm² or less. This makes it easier to supply and release gas involved in the electrolysis reaction from the first electrode layer while ensuring the strength of the first electrode layer, and the first electrode layer can be prevented from peeling.

Another characteristic configuration of the solid oxide electrolysis cell according to the present invention lies in that
the first electrode layer contains at least a plurality of particles having a particle diameter of 0.1 pm or less.

With the above-described characteristic configuration, the first electrode layer contains at least a plurality of particles having a particle diameter of 0.1 pm or less in addition to the pores each having an area of 0.75 µm² or more. This prevents an extreme decrease in the strength of the first electrode layer and secures many electrochemical reaction fields, thereby realizing a high-performance solid oxide electrolysis cell.

Another characteristic configuration of the solid oxide electrolysis cell according to the present invention lies in that
the first electrode layer is an oxygen evolution electrode .

With the above-described characteristic configuration, when electrolysis is performed at high voltage and high current density, a large amount of oxygen is generated on the first electrode layer side due to the electrolysis reaction of steam and carbon dioxide, but the first electrode layer can easily release the gas (oxygen) generated through the electrolysis reaction. Therefore, it is possible to prevent the first electrode layer from peeling off the underlayer, such as the electrolyte layer.

Another characteristic configuration of the solid oxide electrolysis cell according to the present invention lies in that
a reaction prevention layer is disposed between the first electrode layer and the electrolyte layer.

With the above-described characteristic configuration, it is possible to prevent a reaction between the components of the first electrode layer and the components of the electrolyte layer.

Another characteristic configuration of the solid oxide electrolysis cell according to the present invention lies in that
the electrolyte layer contains an oxide-ion conductor.

With the above-described characteristic configuration, the electrolyte layer contains an oxide-ion conductor, and therefore, a solid oxide electrolysis cell that can exhibit high electrochemical performance can be realized.

Another characteristic configuration of the solid oxide electrolysis cell according to the present invention lies in that
the solid oxide electrolysis cell includes a metal support.

With the above-described characteristic configuration, the first electrode layer, the second electrode layer, and the electrolyte layer can be supported by an inexpensive and robust metal support, thereby reducing the amount of expensive ceramic material used and providing a solid oxide electrolysis cell with high strength, reliability, and durability. Furthermore, since it has excellent processability, it is possible to reduce manufacturing costs.

In the case of a solid oxide electrolysis cell with a metal support, in order to prevent damage to the metal support, it is necessary to avoid processing in a high temperature range (e.g., a temperature range higher than 1100°C) during production. As a result, the adhesive strength between the first electrode layer and the underlying layer is likely to be reduced, and the first electrode layer is likely to peel off. However, in a solid oxide electrolysis cell with the above-described characteristic configuration, the first electrode layer has pores each having an area of 0.75 µm² or more, which makes it possible to prevent the first electrode layer from peeling. Therefore, in a solid oxide electrolysis cell with a metal support, in which the problem of peeling of the first electrode layer is likely to occur, the first electrode layer can be prevented from peeling, and the cell can be made to have excellent strength (reliability), durability, and performance.

A characteristic configuration of a method for manufacturing a solid oxide electrolysis cell according to the present invention lies in that
in a method for manufacturing the above-described solid oxide electrolysis cell,
a pore-forming material is used in a process of forming the first electrode layer.

With the above-described characteristic configuration, a pore-forming material is used when forming the first electrode layer, and therefore, pores each having an area of 0.75 µm² or more can be formed in the first electrode layer.

Another characteristic configuration of a method for manufacturing a solid oxide electrolysis cell according to the present invention lies in that
in a method for manufacturing the above-described solid oxide electrolysis cell,
a processing temperature for all processes is 1100°C or less.

With the above-described characteristic configuration, for example, even if the solid oxide electrolysis cell has a metal support, the metal support can be prevented from being damaged.

A characteristic configuration for achieving the above-described object, of a solid oxide electrolysis module according to the present invention lies in that
a set of a plurality of solid oxide electrolysis cells are arranged therein.

With the above-described characteristic configuration, a set of a plurality of solid oxide electrolysis cells are arranged therein, thereby realizing a compact, high-performance solid oxide electrolysis module with excellent strength and reliability while reducing material costs and processing costs.

A characteristic configuration for achieving the above-described object, of an electrochemical device according to the present invention lies in that
the electrochemical device includes at least: the above-described solid oxide electrolysis cell or the above-described solid oxide electrolysis module; and a fuel converter that converts a gas containing a reducing component generated by the solid oxide electrolysis cell or the solid oxide electrolysis module.

When the solid oxide electrolysis cell or the solid oxide electrolysis module is operated as an electrolysis cell, a gas containing steam and carbon dioxide is distributed to the second electrode layer, and a voltage is applied between the second electrode layer and the first electrode layer. As a result, the electrons e⁻ react with water H₂O and carbon dioxide molecules CO₂ in the second electrode layer so that hydrogen H₂, carbon monoxide CO, and oxygen ions O²⁻ are generated. The oxygen ions O²⁻ thus generated move through the electrolyte layer to the first electrode layer. Thereafter, in the first electrode layer, the oxygen ions O\²⁻ release electrons and become oxygen O₂. Through the above reactions, when gas containing steam is distributed, water H₂O is decomposed into hydrogen H₂ and oxygen O₂, and when gas containing carbon dioxide molecules CO₂ is distributed, carbon dioxide is electrolyzed into carbon monoxide CO and oxygen O₂.

Therefore, when a gas containing steam and carbon dioxide molecules CO₂ is to be distributed, a fuel converter can be provided that synthesizes various compounds such as hydrocarbons from the hydrogen, carbon monoxide, and so on generated by the solid oxide electrolysis cell or the solid oxide electrolysis module through the above-described electrolysis. This makes it possible to distribute the hydrocarbons and other substances generated by the fuel converter to the solid oxide electrolysis cell or the solid oxide electrolysis module, or to remove them from the present system/apparatus and use them separately as fuel or chemical raw materials.

A characteristic configuration for achieving the above-described object, of an electrochemical device according to the present invention lies in that
the electrochemical device includes at least: the above-described solid oxide electrolysis cell or the above-described solid oxide electrolysis module; and a power converter that distributes power to the solid oxide electrolysis cell or the solid oxide electrolysis module.

With the above-described characteristic configuration, the power converter can distribute power to the solid oxide electrolysis cell or the solid oxide electrolysis module. As a result, the solid oxide electrolysis cell or the solid oxide electrolysis module functions as an electrolysis cell as described above. Therefore, with the above-described characteristic configuration, it is possible to realize an electrochemical device with improved efficiency in converting electrical energy into chemical energy such as fuel. Note that, for example, it is preferable to use an inverter as a power converter because it is possible to construct an electrochemical device that can obtain DC from an AC power source and supply DC power to the solid oxide electrolysis cell or the solid oxide electrolysis module when the electrochemical device operates as an electrolysis cell.

A characteristic configuration for achieving the above-described object, of an energy system according to the present invention lies in that
the energy system includes at least: the above-described electrochemical device; and an exhaust heat utilization unit that reuses heat discharged from the electrochemical device.

With the above characteristic configuration, it is possible to realize an energy system that is excellent in durability, reliability, and performance, as well as in energy efficiency.

### Brief Description of the Drawings

FIG. 1 is a diagram showing a schematic configuration of a solid oxide electrolysis cell according to an embodiment.
FIG. 2 is a diagram showing a schematic configuration of a solid oxide electrolysis module according to an embodiment.
FIG. 3 is a diagram showing schematic configurations of an electrochemical device and an energy system according to an embodiment.
FIG. 4 is an SEM image showing a vertical cross section of a solid oxide electrolysis cell according to an example.
FIG. 5 is an SEM image showing a vertical cross section of a solid oxide electrolysis cell according to an example.
FIG. 6 is an SEM image showing a vertical cross section of a solid oxide electrolysis cell according to a comparative example.
FIG. 7 is a diagram showing a schematic configuration of a solid oxide electrolysis module according to another embodiment.

### Best Mode for Carrying out the Invention

Hereinafter, a solid oxide electrolysis cell E, a method for manufacturing the same, a solid oxide electrolysis module M, a electrochemical device Y, and an energy system Z according to an embodiment will be described. In the following description, when describing the positional relationship between layers, for example, the side of a counter electrode layer 6 (a first electrode layer) as viewed from an electrolyte layer 4 may be referred to as "above" or an "upper side", and the side of an electrode layer 2 (a second electrode layer) may be referred to as "below" or a "lower side". In addition, the surface of a metal support 1 on which the electrode layer 2 is formed may be referred to as a "front surface" and the opposite surface may be referred to as a "back surface."

### Solid Oxide Electrolytic Cell

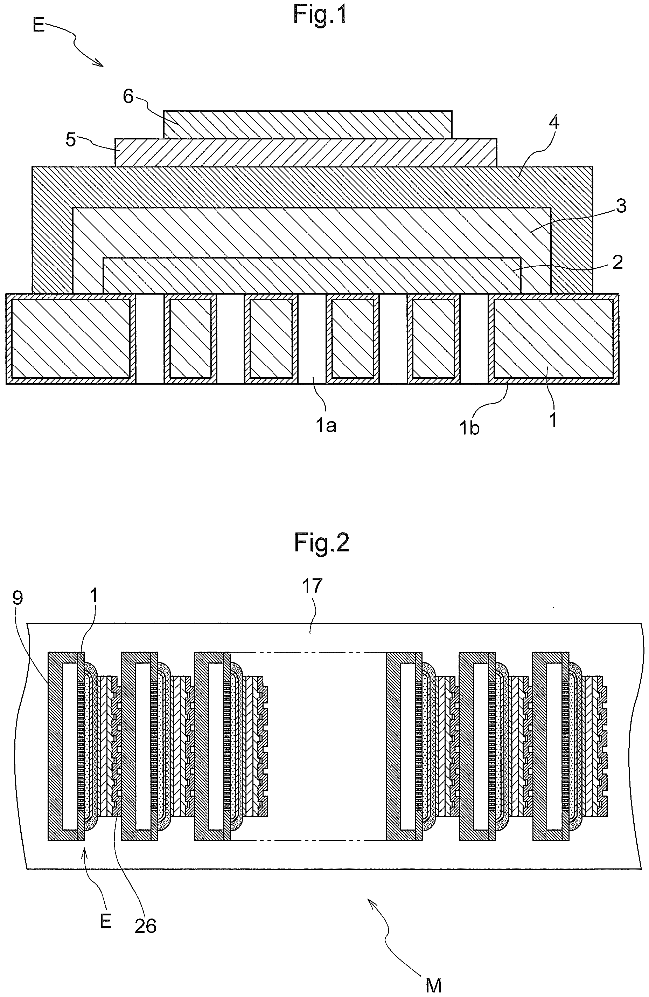

As shown in FIG. 1, the solid oxide electrolysis cell E includes a metal support 1, an electrode layer 2 (second electrode layer), a first reaction prevention layer 3 formed on the electrode layer 2, an electrolyte layer 4 formed on the first reaction prevention layer 3, a second reaction prevention layer 5 formed on the electrolyte layer 4, and a counter electrode layer 6 (first electrode layer) formed on the second reaction prevention layer 5. That is to say, the electrolyte layer 4 is disposed between the counter electrode layer 6 and the electrode layer 2, and the second reaction prevention layer 5 is disposed between the counter electrode layer 6 and the electrolyte layer 4.

### Metal Support

The metal support 1 supports the electrode layer 2, the first reaction prevention layer 3, the electrolyte layer 4, the second reaction prevention layer 5, and the counter electrode layer 6, thereby maintaining the strength of the solid oxide electrolysis cell E. That is to say, the metal support 1 serves as a support that supports the components of the electrolysis cell.

A material that has excellent electronic conductivity, heat resistance, oxidation resistance, and corrosion resistance is used as the material of the metal support 1. For example, ferritic stainless steel, austenitic stainless steel, a nickel-based alloy, or the like is used. In particular, an alloy containing chromium is preferably used. In the present embodiment, an Fe-Cr-based alloy containing not less than 18 mass% and not more than 25 mass% of Cr is used as the material of the metal support 1. However, it is particularly preferrable that the material is an Fe-Cr-based alloy containing not less than 0.05 mass% of Mn, an Fe-Cr-based alloy containing not less than 0.15 mass% and not more than 1.0 mass% of Ti, an Fe-Cr-based alloy containing not less than 0.15 mass% and not more than 1.0 mass% of Zr, an Fe-Cr-based alloy containing Ti and Zr in which the total content of Ti and Zr is not less than 0.15 mass% and not more than 1.0 mass%, or an Fe-Cr-based alloy containing not less than 0.10 mass% and not more than 1.0 mass% of Cu.

It is preferable that the metal support 1 be made of a ferritic stainless steel material because this realizes a solid oxide electrolysis cell E with high strength at low cost.

The metal support 1 is plate-shaped as a whole. The metal support 1 need only be strong enough to form the solid oxide electrolysis cell E as a support, and the thickness thereof is preferably, for example, not less than 0.1 mm, more preferably not less than 0.15 mm, and even more preferably not less than 0.2 mm, in terms of ensuring the strength thereof. In addition, from the viewpoint of cost reduction, the thickness is, for example, preferably not more than 2 mm, more preferably not more than 1 mm, and even more preferably not more than 0.5 mm. The metal support 1 has a plurality of through holes 1a passing through the metal support 1 from the surface on which the electrode layer 2 is provided (the front surface) to the back surface. In the present embodiment, the metal support 1 is a metal plate having the plurality of through holes 1a formed by mechanical, chemical, or optical perforation (hole processing) such as punching, etching, or laser processing so as to pass through the metal plate from the front surface to the back surface. This allows smooth supply of a gas containing steam and carbon dioxide (hereinafter also simply referred to as "mixed gas") from the back surface of the metal support 1 to the electrode layer 2 side, thereby realizing a high-performance solid oxide electrolysis cell E.

Note that the plate-shaped metal support 1 can also be bent and deformed into, for example, a box shape or a cylindrical shape for use.

A metal oxide layer 1b is provided on the front surface of the metal support 1 as a diffusion prevention layer. That is to say, the diffusion prevention layer is formed between the metal support 1 and the electrode layer 2 described below. The metal oxide layer 1b is provided not only on the surface exposed to the outside of the metal support 1, but also on the contact surface (interface) with the electrode layer 2 and the inner surfaces of the through holes 1a. This metal oxide layer 1b can prevent interdiffusion of elements between the metal support 1 and the electrode layer 2. For example, when ferritic stainless steel containing chromium is used as the metal support 1, the metal oxide layer 1b is mainly composed of a chromium oxide. The metal oxide layer 1b, which is mainly composed of the chromium oxide, prevents the chromium atoms, etc. of the metal support 1 from diffusing to the electrode layer 2 and the electrolyte layer 4. The thickness of the metal oxide layer 1b may be any thickness that can achieve both high diffusion prevention performance and low electrical resistance. For example, it is preferable that the thickness is on the order of submicrometers, and more specifically, the average thickness is more preferably not less than approximately 0.3 pm and not more than approximately 0.7 pm. The minimum thickness is preferably not less than approximately 0.1 pm. The maximum thickness is preferably not more than approximately 1.1 pm.

The metal oxide layer 1b can be formed by various techniques, but a technique of oxidizing the surface of the metal support 1 to form a metal oxide is preferably used. In addition, the metal oxide layer 1b may be formed on the surface of the metal support 1 by a PVD technique such as a sputtering technique or a PLD technique, a CVD technique, a spray coating technique (such as a thermal spray technique, an aerosol deposition technique, an aerosol gas deposition technique, a powder jet deposition technique, a particle jet deposition technique, or a cold spraying technique), or may be formed by a plating and oxidation treatment. Furthermore, the metal oxide layer 1b may also contain a spinel phase that has high electrical conductivity, or the like.

### Electrode Layer

As shown in FIG. 1, the electrode layer 2 can be provided as a thin layer on the surface of the metal support 1 so as to cover the region in which the through holes 1a of the metal support 1 are formed. When the electrode layer 2 is a thin layer, the thickness thereof can be approximately in the range of 1 pm to 100 pm, preferably in the range of 5 pm to 50 pm, for example. With such a thickness, it is possible to reduce the amount of expensive electrode layer material used, thereby reducing costs, while still ensuring sufficient electrode performance. In addition, the region of the metal support 1 in which the through holes 1a are provided is entirely covered by the electrode layer 2. That is to say, the through holes 1a are formed within the region of the metal support 1 in which the electrode layer 2 is formed. In other words, all through holes 1a are provided so as to face the electrode layer 2.

For example, a composite material such as NiO-GDC, Ni-GDC, NiO-YSZ, Ni-YSZ, CuO-CeO₂, or Cu-CeO₂ can be used as the material of the electrode layer 2.
In these examples, GDC, YSZ, and CeO₂ can be called the aggregate of the composite material.

Note that it is preferable to form the electrode layer 2 using a low-temperature calcination technique (not performing a calcination treatment in a high temperature range above 1100°C, but rather performing a wet process using a calcination treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. These processes, which can be used in a low temperature range, make it possible to obtain a favorable electrode layer 2 without using calcination in a high temperature range above, for example, 1100°C. Therefore, these processes are preferable because they do not damage the metal support 1 and make it possible to prevent diffusion of elements between the metal support 1 and the electrode layer 2, thereby realizing a solid oxide electrolysis cell E with excellent durability. Furthermore, it is even more preferable to use a low-temperature calcination technique because it makes it easier to handle the raw materials.

The electrode layer 2 has a plurality of fine pores inside and on the surface thereof to provide gas permeability. That is to say, the electrode layer 2 is formed as a porous layer. The electrode layer 2 is formed so that the denseness thereof is not less than 30% and less than 80%, for example. The size of the fine pores can be appropriately selected so that the electrochemical reaction can proceed smoothly. Note that "denseness" is a ratio of the material of the layer to the space and can be represented by the formula "1 - Porosity", and is equivalent to the relative density.

### First Reaction Prevention Layer

As shown in FIG. 1, the first reaction prevention layer 3 can be formed as a thin layer on the electrode layer 2 so as to cover the electrode layer 2. When the first reaction prevention layer 3 is a thin layer, the thickness thereof can be approximately in the range of 1 pm to 100 pm, preferably approximately in the range of 2 pm to 50 pm, and more preferably approximately in the range of 4 pm to 25 pm, for example. With such a thickness, it is possible to reduce the amount of expensive reaction prevention layer material used, thereby reducing costs, while still ensuring sufficient performance.

YSZ (yttria-stabilized zirconia), SSZ (scandium-stabilized zirconia), GDC (gadolinium-doped ceria), YDC (yttrium-doped ceria), SDC (samarium-doped ceria), or the like can be used as the material of the first reaction prevention layer 3. In particular, ceria-based ceramics are favorably used.

It is preferable to form the first reaction prevention layer 3 using a low-temperature calcination technique (not performing a calcination treatment in a high temperature range above 1100°C, but rather performing a wet process using a calcination treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. These film formation processes, which can be used in a low temperature range, make it possible to obtain a favorable first reaction prevention layer 3 without using calcination in a high temperature range above, for example, 1100°C. Therefore, these processes do not damage the metal support 1 and make it possible to prevent diffusion of elements between the metal support 1 and the electrode layer 2, thereby realizing a solid oxide electrolysis cell E with excellent durability. In addition, it is even more preferable to use a low-temperature calcination technique because it makes it easier to handle the raw materials.

Note that, in the present embodiment, it is even more preferable that the first reaction prevention layer 3 is a mixed conductor having both oxygen ion (oxide ion) conductivity and electron conductivity. The first reaction prevention layer 3 with such properties is suitable for application to the solid oxide electrolysis cell E.

### Electrolyte Layer

As shown in FIG. 1, the electrolyte layer 4 is formed as a thin layer on the the first reaction prevention layer 3.
The electrolyte layer 4 can also be formed as a thin film having a thickness of 10 pm or less. In the present embodiment, the electrolyte layer 4 is provided on both the first reaction prevention layer 3 and the metal support 1 (spanning the first reaction prevention layer 3 and the metal support 1). Using such a configuration and joining the electrolyte layer 4 to the metal support 1 make it possible to allow the solid oxide electrolysis cell E to have excellent toughness as a whole.

In addition, the electrolyte layer 4 is provided on the front surface of the metal support 1 in a region that is larger than the region in which the through holes 1a are provided. That is to say, the through holes 1a are formed within the region of the metal support 1 in which the electrolyte layer 4 is formed. As a result, in a region around the electrolyte layer 4, it is possible to prevent gas from leaking from the electrode layer 2 and the first reaction prevention layer 3. Specifically, when the solid oxide electrolysis cell E is in operation, a mixed gas is supplied from the back side of the metal support 1 to the electrode layer 2 through the through holes 1a. In a region where the electrolyte layer 4 is in contact with the metal support 1, it is possible to prevent gas from leaking, without providing another member such as a gasket. Although the electrolyte layer 4 encloses the entire electrode layer 2 in the present embodiment, a configuration is also possible in which the electrolyte layer 4 is provided on the electrode layer 2 and the first reaction prevention layer 3, and a gasket or the like is provided around the electrode layer 2.

Electrolyte materials that conduct oxygen ions (oxide-ion conductors), such as an YSZ (yttria-stabilized zirconia), an SSZ (scandium-stabilized zirconia), a GDC (gadolinium-doped ceria), an YDC (yttrium-doped ceria), an SDC (samarium-doped ceria), an LSGM (strontium- and magnesium-doped lanthanum gallate), or the like can be used as the material of the electrolyte layer 4. In particular, zirconia-based ceramics are favorably used. In the present embodiment, the electrolyte layer 4 contains stabilized zirconia.

It is preferable to form the electrolyte layer 4 using a low-temperature calcination technique (not performing a calcination treatment in a high temperature range above 1100°C, but rather performing a wet process using a calcination treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. These film formation processes, which can be used in a low temperature range, make it possible to obtain a favorable electrolyte layer 4 that is dense and has high gastightness and gas barrier properties without using calcination in a high temperature range above, for example, 1100°C. Therefore, these processes prevent the metal support 1 from being damaged, and make it possible to prevent diffusion of elements between the metal support 1 and the electrode layer 2, thereby realizing a solid oxide electrolysis cell E with excellent performance and durability.
In particular, it is preferable to use a low-temperature calcination technique, a spray coating technique, or the like because they make it possible to realize a low-cost element. Furthermore, using a spray coating technique is even more preferable because it makes it easier to obtain an electrolyte layer 4 that is dense and has high gastightness and gas barrier properties in a low temperature range.

The electrolyte layer 4 is given a dense configuration in order to prevent leakage of the mixed gas supplied to the electrode layer 2 and oxygen gas generated in the counter electrode layer 6, and to exhibit high ion conductivity. The denseness of the electrolyte layer 4 is preferably 90% or more, more preferably 95% or more, and even more preferably 98% or more. When the electrolyte layer 4 is a uniform layer, the denseness thereof is preferably 95% or more, and more preferably 98% or more. When the electrolyte layer 4 has a multilayer configuration, at least a portion thereof preferably includes a layer (dense electrolyte layer) having a denseness of 98% or more, and more preferably a layer (dense electrolyte layer) having a denseness of 99% or more. The reason for this is that an electrolyte layer 4 that is dense and has high gastightness and gas barrier properties can be easily formed due to such a dense electrolyte layer being included as a portion of the electrolyte layer 4 even when the electrolyte layer 4 has a multilayer configuration.

### Second Reaction Prevention Layer

The second reaction prevention layer 5 can be formed as a thin layer on the electrolyte layer 4. When the second reaction prevention layer 5 is a thin layer, the thickness thereof can be approximately in the range of 1 pm to 100 pm, preferably approximately in the range of 2 pm to 50 pm, and more preferably approximately in the range of 3 pm to 15 pm, for example. With such a thickness, it is possible to reduce the amount of expensive reaction prevention layer material used, thereby reducing costs, while still ensuring sufficient performance.

The material of the second reaction prevention layer 5 need only be a material that is capable of preventing reactions between the component of the electrolyte layer 4 and the component of the counter electrode layer 6, and, for example, a ceria-based material or the like is used. Materials that contain at least one element selected from the group consisting of Sm, Gd, and Y are favorably used as the material of the second reaction prevention layer 5. It is preferable that at least one element selected from the group consisting of Sm, Gd, and Y is contained, and the total content of these elements is not less than 1.0 mass% and not more than 10 mass%. Introducing the second reaction prevention layer 5 between the electrolyte layer 4 and the counter electrode layer 6 effectively prevents reactions between the material constituting the counter electrode layer 6 and the material constituting the electrolyte layer 4 and makes it possible to improve long-term stability in the performance of the solid oxide electrolysis cell E.

It is preferable that the second reaction prevention layer 5 has oxygen ion (oxide ion) conductivity. It is even more preferable that the second reaction prevention layer 5 is a mixed conductor having both oxygen ion (oxide ion) conductivity and electron conductivity. The second reaction prevention layer 5 with such properties is suitable for application to the solid oxide electrolysis cell E.

It is preferable to form the second reaction prevention layer 5 using, as appropriate, a method through which the second reaction prevention layer 5 can be formed at a treatment temperature of 1100°C or lower because such a method makes it possible to prevent the metal support 1 from being damaged and prevent diffusion of elements between the metal support 1 and the electrode layer 2, thereby realizing a solid oxide electrolysis cell E that has excellent performance and durability. For example, as appropriate, it is possible to use a low-temperature calcination technique (not performing a calcination treatment in a high temperature range above 1100°C, but rather performing a wet process using a calcination treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. In particular, it is preferable to use a low-temperature calcination technique, a spray coating technique, or the like because they make it possible to realize a low-cost electrolysis cell. Furthermore, it is even more preferable to use a low-temperature calcination technique because it makes it easier to handle the raw materials.

### Counter Electrode Layer

The counter electrode layer 6 can be formed as a thin layer on the second reaction prevention layer 5. When the counter electrode layer 6 is a thin layer, the thickness thereof can be approximately in the range of 1 pm to 100 pm, preferably in the range of 5 pm to 50 pm, for example. With such a thickness, it is possible to reduce the amount of expensive counter electrode layer material used, thereby reducing costs, while still ensuring sufficient electrode performance.

A complex oxide such as LSCF or LSM, or a ceria-based oxide, or a mixture thereof can be used as the material of the counter electrode layer 6, for example. In particular, it is preferable that the counter electrode layer 6 includes a perovskite oxide containing two or more elements selected from the group consisting of La, Sr, Sm, Mn, Co, and Fe. The counter electrode layer 6 constituted by the above-mentioned material functions as an oxygen evolution electrode.

Note that it is preferable to form the counter electrode layer 6 using, as appropriate, a method through which the counter electrode layer 6 can be formed at a treatment temperature of 1100°C or lower because such a method makes it possible to prevent the metal support 1 from being damaged and prevent diffusion of elements between the metal support 1 and the electrode layer 2, thereby realizing a solid oxide electrolysis cell E that has excellent performance and durability. For example, as appropriate, it is possible to use a low-temperature calcination technique (not performing a calcination treatment in a high temperature range above 1100°C, but rather performing a wet process using a calcination treatment in a low temperature range, for example). In particular, it is preferable to use a low-temperature calcination technique because it makes it possible to realize a low-cost electrolysis cell. Furthermore, it is even more preferable to use a low-temperature calcination technique because it makes it easier to handle the raw materials.

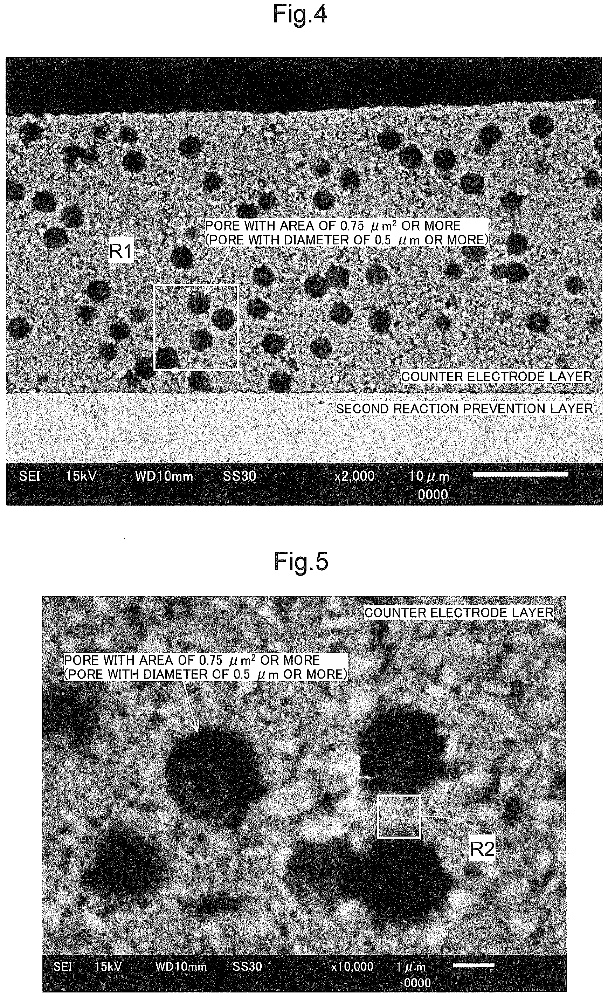

The counter electrode layer 6 in the present embodiment has pores each having an area of not less than 0.75 µm² in a vertical cross section (see FIGS. 4 and 5), and preferably has pores each having an area of not less than 0.75 µm² (preferably not less than 3 µm², more preferably not less than 12 µm²) and not more than 55 µm². In particular, the counter electrode layer 6 has, in a vertical cross section thereof, a 10 pm square region (region R1 in FIG. 4) in which there are three or more pores each having an area of not less than 0.75 µm² (or an area of not less than 0.75 µm² (preferably not less than 3 µm², more preferably not less than 12 µm²) and not more than 55 µm²). In this way, the presence of the pores each having an area of 0.75 µm² or more in the counter electrode layer 6 makes it easier for oxygen generated on the counter electrode layer 6 side through the electrolysis reaction of steam and carbon dioxide to be released from the counter electrode layer 6, thereby making it possible to prevent the counter electrode layer 6 from peeling off the second reaction prevention layer 5. If the number of pores each having an area of 0.75 µm² or more present in the counter electrode layer 6 is small, oxygen will not be released sufficiently from the counter electrode layer 6, and as a result, there is a risk that the counter electrode layer 6 may not be sufficiently prevented from peeling.

However, in the solid oxide electrolysis cell E in the present embodiment, as described above, the counter electrode layer 6 has a 10 pm square region in the vertical cross section thereof in which three or more pores each having an area of 0.75 µm² or more are present, and the number of pores each having an area of 0.75 µm² or more present in the counter electrode layer 6 is sufficient for releasing gas (oxygen) involved in the electrolysis reaction. Therefore, the counter electrode layer 6 can be further prevented from peeling. It is preferable that the pores each having an area of 0.75 µm² or more are pores each having a diameter of 0.5 pm or more in the vertical cross section. The shape of the pores each having an area of 0.75 µm² or more in the vertical cross section is substantially circular in FIG. 4. However, the shape thereof in the vertical cross section may be changed as appropriate depending on the shape of the pore-forming material described below and the position of the pores in the counter electrode layer 6, and may be a circle, a triangle, a rectangle, or an ellipse.

In addition, the counter electrode layer 6 has at least pores each having an area of 0.04 µm² or less in the vertical cross section (see FIGS. 4 and 5). That is to say, the entire counter electrode layer 6 has both pores on the order of micrometers and pores on the order of nanometers. The presence of both pores on the order of micrometers and pores on the order of nanometers in this manner not only facilitates the release of oxygen from the counter electrode layer 6, but also increases the surface area compared to a case in which the counter electrode layer has only pores on the order of micrometers. Therefore, more electrochemical reaction fields can be secured in the counter electrode layer 6, thereby improving the performance and strength of the electrolysis cell. It is preferable that the pores each having an area of 0.04 µm² or less are pores each having a diameter of 0.1 pm or less in the vertical cross section.

Note that if the number of pores each having an area of 0.75 µm² or more present in the counter electrode layer 6 (first electrode layer) is too large, the strength of the counter electrode layer 6 may be reduced, making it difficult to ensure the durability of the solid oxide electrolysis cell E. Conversely, as described above, if the number of pores each having an area of 0.75 µm² or more present in the counter electrode layer 6 is small, oxygen is likely to be insufficiently released from the counter electrode layer 6, and there is a risk that the counter electrode layer 6 may not be sufficiently prevented from peeling. Therefore, it is preferable that the counter electrode layer 6 has a suitable number of pores each having an area of 0.75 µm² or more. Therefore, it is preferable that the counter electrode layer 6 has a vertical cross section in which a first porosity, which is the proportion of only the pores each having an area of 0.75 µm² or more (or an area of not less than 0.75 µm² (preferably not less than 3 µm², more preferably not less than 12 µm²) and not more than 55 µm²), is not less than 5% and less than 20%. This makes it possible to ensure the strength of the counter electrode layer 6 and to prevent the counter electrode layer 6 from peeling. Note that the lower limit of the first porosity is more preferably 8% or more, and even more preferably 10% or more. The upper limit of the first porosity is more preferably less than 15%, and even more preferably less than 12%.

From the same point of view, it is preferable that the counter electrode layer 6 has a vertical cross section in which a second porosity, which is the proportion of pores each having an area of 0.75 µm² or more and pores each having an area of 0.04 µm² or less, is not less than 10% and not more than 40%. Note that the lower limit of the second porosity is preferably 15% or more, and even more preferably 20% or more, and the upper limit of the second porosity is preferably 35% or less, and even more preferably 30% or less. Furthermore, it is preferable that the counter electrode layer 6 has a vertical cross section in which a third porosity, which is the proportion of only the pores each having an area of 0.04 µm² or less, is not less than 5% and not more than 35%. Note that the lower limit of the third porosity is preferably 7% or more, and even more preferably 10% or more, and the upper limit of the third porosity is preferably 20% or less, and even more preferably 18% or less. Even in such cases, it is possible to ensure the strength of the counter electrode layer 6 and to prevent the counter electrode layer 6 from peeling.

The number of pores each having an area of 0.75 µm² or more that appear in the vertical cross section varies depending on the degree of dispersion of the pore-forming material during manufacture and the location where the cross section is taken. However, when it is assumed that the pores each having an area of 0.75 µm² or more are uniformly dispersed throughout the counter electrode layer 6, the first porosity corresponds to the porosity that is the proportion of the volume of only the pores each having an area of 0.75 µm² or more in the entire counter electrode layer 6. Furthermore, when it is assumed that the pores each having an area of 0.04 µm² or less are also uniformly dispersed throughout the counter electrode layer 6, the second porosity corresponds to the porosity that is the proportion of the volume of the pores each having an area of 0.75 µm² or more and the pores each having an area of 0.04 µm² or less in the entire counter electrode layer 6, and the third porosity corresponds to the porosity that is the proportion of the volume of the pores each having an area of 0.04 µm² or less in the entire counter electrode layer 6. In addition, when it is assumed that the majority of the pores present in the counter electrode layer 6 are pores each having an area of 0.75 µm² or more and pores each having an area of 0.04 µm² or less in the vertical cross section, and that the pores each having an area of 0.75 µm² or more and pores each having an area of 0.04 µm² or less are uniformly dispersed throughout the counter electrode layer 6, the second porosity can be regarded as the porosity of the counter electrode layer 6.

In addition, the counter electrode layer 6 contains at least a plurality of particles having a particle diameter (average particle diameter) of 0.1 pm or less. It is preferable that the counter electrode layer 6 has at least a region (region R2 in FIG. 5) constituted by particles having an average particle diameter of 0.1 pm or less. With such a configuration, many electrochemical reaction fields can be secured, so that a high-performance counter electrode layer 6 can be obtained.

In addition, an extreme decrease in the strength of the counter electrode layer 6 can also be prevented.

When the solid oxide electrolysis cell E having the above configuration is to be operated, for example, a mixed gas (steam and carbon dioxide) is distributed to the electrode layer 2, and a voltage is applied between the electrode layer 2 and the counter electrode layer 6. As a result, electrons e⁻ react with water H₂O and carbon dioxide molecules CO₂ in the electrode layer 2 so that reducing components such as hydrogen H₂ and carbon monoxide CO and oxygen ions O²⁻ are generated. The oxygen ions O²⁻ move through the electrolyte layer 4 to the counter electrode layer 6. Thereafter, in the counter electrode layer 6, the oxygen ions O²⁻ release electrons and become oxygen O₂. Through the above reactions, water H₂O is electrolyzed into hydrogen H₂ and oxygen O₂. When gas containing carbon dioxide molecules CO₂ is distributed, it is electrolyzed into carbon monoxide CO and oxygen O₂.

### Method for Manufacturing Solid Oxide Electrolytic Cell

Next, a method for manufacturing the solid oxide electrolysis cell E will be described. The method for manufacturing the solid oxide electrolysis cell E according to the present embodiment includes an electrode layer formation step, a first reaction prevention layer formation step, an electrolyte layer formation step, a second reaction prevention layer formation step, and a counter electrode layer formation step.

It is preferable that the processing temperature in all of these steps (all processes) is 1100°C or less.

### Electrode Layer Formation Step

In the electrode layer formation step, the electrode layer 2 is formed as a thin film on the metal support 1. The electrode layer 2 can be formed by the above-described film formation method, but in order to suppress deterioration of the metal support 1, it is preferable to use a film formation method that can be used in a low temperature range not exceeding 1100°C.

When the electrode layer formation step is performed using a low-temperature calcination method, the step is specifically performed in the following manner.

First, a material powder of the electrode layer 2 and a solvent (dispersion medium) are mixed to form a material paste, which is then applied to the front surface of the metal support 1. Thereafter, the electrode layer 2 is compression molded (electrode layer smoothing process), and fired at 1100°C or lower (electrode layer calcination process). The electrode layer 2 can be compression molded by, for example, CIP (Cold Isostatic Pressing) molding, roll pressure molding, RIP (Rubber Isostatic Pressing) molding, or the like. It is preferable that the electrode layer 2 is fired at a temperature of not less than 800°C and not more than 1100°C. The order in which the electrode layer smoothing process and the electrode layer calcination process are performed can be interchanged.

Note that, in the present embodiment, the first reaction prevention layer 3 is formed after the electrode layer 2 is formed, and therefore the electrode layer smoothing process and the electrode layer calcination process may be omitted, or the electrode layer smoothing process and the electrode layer calcination process may be included in the reaction prevention layer smoothing process and the reaction prevention layer calcination process described below. The electrode layer smoothing process can be performed by applying lapping molding, a leveling treatment, a surface cutting treatment, a surface polishing treatment, or the like.

In addition, in the present embodiment, the metal oxide layer 1b (diffusion prevention layer) is formed on the surface of the metal support 1 during the calcination process in the electrode layer formation step. That is to say, in the present embodiment, the above-described calcination process includes a calcination process performed under calcination atmosphere conditions with a low oxygen partial pressure. As a result, a high-quality metal oxide layer 1b that can effectively prevent interdiffusion of elements and has a low resistance value is formed. Note that in cases including the case where the electrolyte layer formation step is performed using a method that does not involve calcination, a separate process of forming a diffusion prevention layer may be performed.

### First Reaction Prevention Layer Formation Step

In the first reaction prevention layer formation step, the first reaction prevention layer 3 is formed as a thin film on the electrode layer 2 so as to cover the electrode layer 2. The first reaction prevention layer 3 can be formed by the above-described film formation method, but in order to suppress deterioration of the metal support 1, it is preferable to use a film formation method that can be used in a low temperature range not exceeding 1100°C.

When the first reaction prevention layer formation step is performed using a low-temperature calcination method, the step is specifically performed in the following manner. First, a material powder of the first reaction prevention layer 3 and a solvent (dispersion medium) are mixed to form a material paste, which is then applied to the front surface of the electrode layer 2. The first reaction prevention layer 3 is compression molded (first reaction prevention layer smoothing process), and fired at 1100°C or lower (first reaction prevention layer calcination process). The first reaction prevention layer 3 can be compression molded by, for example, CIP molding, roll pressure molding, RIP molding, or the like. It is preferable that the first reaction prevention layer 3 is fired at a temperature of not less than 800°C and not more than 1100°C. This is because at such a temperature, damage and deterioration of the metal support 1 can be suppressed and the first reaction prevention layer 3 with high strength can be formed. In addition, the first reaction prevention layer 3 is more preferably fired at 1050°C or less, and even more preferably fired at 1000°C or less. This is because the lower the calcination temperature for the first reaction prevention layer 3 is, the more the damage and deterioration of the metal support 1 can be suppressed when the solid oxide electrolysis cell E is formed. Note that the order in which the first reaction prevention layer smoothing process and the first reaction prevention layer calcination process are performed can be interchanged. In addition, the first reaction prevention layer smoothing process can be performed by applying lapping molding, a leveling treatment, a surface cutting treatment, a surface polishing treatment, or the like.

### Electrolyte Layer Formation Step

In the electrolyte layer formation step, the electrolyte layer 4 can be formed as a thin layer on the first reaction prevention layer 3 so as to cover the electrode layer 2 and the first reaction prevention layer 3. The electrolyte layer 4 can be formed by a film formation method that can be used in the above-described low temperature range, but a spray coating method is preferably used. In particular, in order to form a high-quality electrolyte layer 4 that is dense and has high gastightness and gas barrier performance in a temperature range of 1100°C or less, it is more preferable to use any one of an aerosol deposition technique, an aerosol gas deposition technique, a powder jet deposition technique, and a particle jet deposition technique. In the present embodiment, an aerosol deposition technique is used to form the electrolyte layer 4. Specifically, aerosolized material powder of the electrolyte layer 4 (in this embodiment, fine powder of stabilized zirconia such as YSZ or SSZ) is sprayed toward the first reaction prevention layer 3 on the metal support 1 to form the electrolyte layer 4.

### Second Reaction Prevention Layer Formation Step

In the second reaction prevention layer formation step, the second reaction prevention layer 5 is formed as a thin film on the electrolyte layer 4. The second reaction prevention layer 5 can be formed by the above-described film formation method as in the first reaction prevention layer formation step, but in order to suppress deterioration of the metal support 1, it is preferable to use a film formation method that can be used in a low temperature range not exceeding 1100°C.

### Counter Electrode Layer Formation Step

In the counter electrode layer formation step, the counter electrode layer 6 is formed as a thin film on the second reaction prevention layer 5. The counter electrode layer 6 can be formed by the above-described film formation method, but in order to suppress deterioration of the metal support 1, it is preferable to use a film formation method that can be used in a low temperature range not exceeding 1100°C.

When the counter electrode layer formation step is performed using a low-temperature calcination method, the step is specifically performed in the following manner. First, a material powder of the counter electrode layer 6, a pore-forming material, and a solvent (dispersion medium) are mixed to form a material paste, which is then applied to the front surface of the metal support 1. Thereafter, the electrode layer 2 is compression molded (electrode layer smoothing process), and fired at 1100°C or lower (electrode layer calcination process). As a result, the counter electrode layer 6 has pores each having an area of 0.75 µm² or more in the vertical cross section. As the pore-forming material, PMMA (polymethyl methacrylate) or PVDF (polyvinylidene fluoride) can be used. The amount of the pore-forming material to be mixed may be appropriately determined depending on the number of pores each having an area of 0.75 µm² or more to be formed in the counter electrode layer 6. Taking into consideration the first porosity and the second porosity described above, the mixing ratio (by mass) of the pore-forming material to the material powder of the counter electrode layer 6 is preferably 2% to 8%. In addition, the particle diameter (average particle diameter) of the pore-forming material may be appropriately determined depending on the diameter of the pores to be formed in the counter electrode layer 6, and is, for example, not less than 0.5 pm and not more than 4 pm, and is 2 pm in the present embodiment. Note that the pore-forming material is not limited to having a spherical shape, but may have various shapes such as an ellipsoidal sphere, a cylindrical shape, a prismatic shape, or a pellet shape.

In this way, it is possible to manufacture a solid oxide electrolysis cell E having a counter electrode layer 6 from which oxygen is easily released, and in which the counter electrode layer 6 can be prevented from peeling.

### Solid Oxide Electrolytic Module

Next, the solid oxide electrolysis module M will be described with reference to FIG. 2. The solid oxide electrolysis module M includes a solid oxide electrolysis cell E in which a cylindrical support is formed with the metal support 1 and a U-shaped member 9 attached to the back surface of the metal support 1. The solid oxide electrolysis module M is formed by stacking (assembling) a plurality of solid oxide electrolysis cells E with current collecting members 26 interposed therebetween. Note that in the present embodiment, a current collecting member 26 is joined to the counter electrode layer 6 and the U-shaped member 9 of each solid oxide electrolysis cell E so that they are electrically connected, but the counter electrode layer 6 and the U-shaped member 9 of each solid oxide electrolysis cell E may be directly electrically connected to each other.

In addition, the solid oxide electrolysis module M includes a gas manifold 17, a terminal member, and a current drawing portion. One open end of the cylindrical support of each of the plurality of stacked solid oxide electrolysis cells E is connected to the gas manifold 17, and gas (steam or carbon dioxide) is supplied from the gas manifold 17. The supplied gas flows through the inside of the cylindrical supports, and is supplied to the electrode layers 2 through the through holes 1a of the metal supports 1.

### Electrochemical Device and Energy System

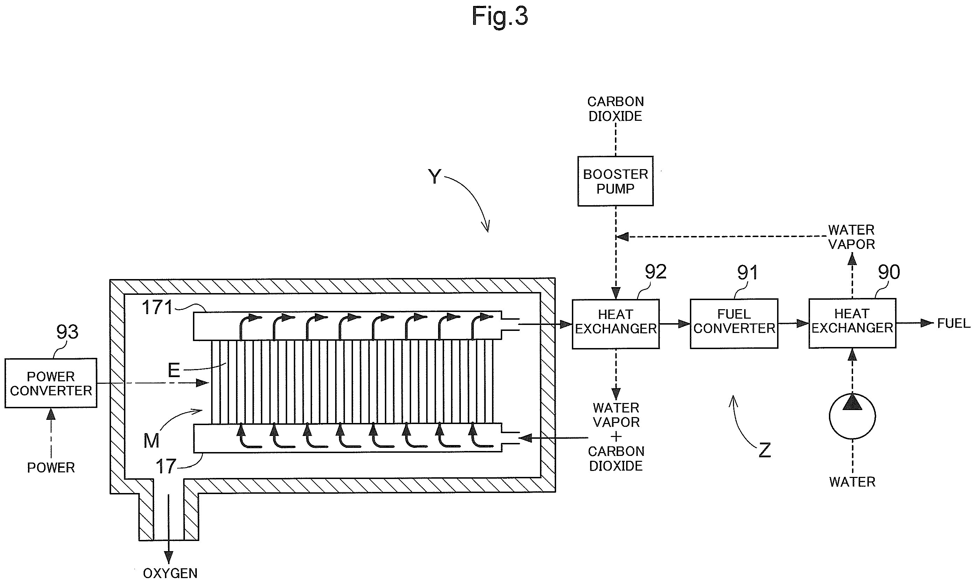

Next, an electrochemical device Y formed using the solid oxide electrolysis module M, and the energy system Z will be described with reference to FIG. 3.

As shown in FIG. 3, the energy system Z includes the electrochemical device Y and two heat exchangers 90 and 92 serving as exhaust heat utilization units that reuse the heat distributed from the electrochemical device Y

The electrochemical device Y includes the solid oxide electrolysis module M, a fuel converter 91 that synthesizes hydrocarbons from the hydrogen or the like generated in the solid oxide electrolysis module M, and a power converter 93 that distributes electric power to the solid oxide electrolysis module M.

In this electrochemical device Y, the solid oxide electrolysis module M includes a plurality of solid oxide electrolysis cells E and two gas manifolds 17 and 171. The plurality of solid oxide electrolysis cells E are arranged side by side and electrically connected to each other. Each solid oxide electrolysis cell E has one end (lower end) fixed to the gas manifold 17, and the other end (upper end) fixed to the gas manifold 171. The gas manifold 17 at one end of each solid oxide electrolysis cell E receives a supply of steam and carbon dioxide. The hydrogen and carbon monoxide generated through the above-described reaction in each solid oxide electrolysis cell E are collected by the gas manifold 171 communicating with the other end thereof.

In addition, in this electrochemical device Y, the power converter 93 supplies power to the solid oxide electrolysis cells E of the solid oxide electrolysis module M. As a result, in each solid oxide electrolysis cell E, steam and carbon dioxide supplied through the gas manifold 17 fixed to the lower end thereof are electrolyzed, and hydrogen and carbon monoxide are converted into fuel through the gas manifold 171 fixed to the upper end thereof, via the heat exchanger 92, the fuel converter 91, and the heat exchanger 90. On the other hand, oxygen is released from the counter electrode layer 6 and discharged to the outside.

In addition, in the energy system Z, the heat exchanger 90 operates as an exhaust heat utilization unit that causes heat exchange between the reaction heat generated through the reaction in the fuel converter 91 and water to evaporate the water, and the heat exchanger 92 operates as an exhaust heat utilization unit that causes heat exchange between the exhaust heat generated by the solid oxide electrolysis cells E and steam and carbon dioxide to preheat the steam and carbon dioxide. By adopting such a configuration, it is possible to improve energy efficiency.

### Examples

Examples will be described below. First, the metal support 1 was manufactured by forming a plurality of through holes 1a by laser processing in a circular ferritic stainless steel plate (metal plate) having a thickness of 0.3 mm and a diameter of 25 mm in an area having a radius of 6 mm from the center.

Next, 60 mass% of NiO powder and 40 mass% of GDC powder were mixed, and an organic binder and an organic solvent (dispersion medium) were added to manufacture a paste. Using this paste, the electrode layer 2 was stacked on an area with a radius of 8 mm from the center of the metal support 1. Note that the electrode layer 2 was formed by screen printing. Thereafter, the metal support 1, on which the electrode layer 2 was stacked, was subjected to a calcination treatment at 1000°C (the electrode layer formation step).

Next, an organic binder and an organic solvent (dispersion medium) were added to a fine powder of GDC to manufacture a paste. Using this paste, the first reaction prevention layer 3 was stacked by screen printing on an area with a radius of 10 mm from the center of the metal support 1 on which the electrode layer 2 was stacked. Thereafter, the metal support 1 on which the first reaction prevention layer 3 was stacked was subjected to CIP molding at a pressure of 300 MPa, and then a calcination treatment was performed at 1000°C to form the first reaction prevention layer 3 with a flat surface (the first reaction prevention layer formation step).

The electrode layer 2 and the first reaction prevention layer 3 obtained through the above steps respectively had a thickness of approximately 25 pm and a thickness of approximately 10 pm.

Next, the electrolyte layer 4 was formed using an aerosol deposition technique. Specifically, an 8YSZ (yttria stabilized zirconia) powder with a mode shape of approximately 0.7 pm was aerosolized with dry air at a flow rate of 13 L/min. The aerosol was introduced into a chamber with a pressure of 250 Pa, and sprayed onto the entire surface of the metal support 1 on which the electrode layer 2 and the first reaction prevention layer 3 was stacked, so as to cover the first reaction prevention layer 3, to form the electrolyte layer 4 (the electrolyte layer formation step). At that time, the metal support 1 was not heated.

The thickness of the electrolyte layer 4 obtained through the above steps was approximately 3 to 4 pm. When the He leakage amount of the metal support 1 with the electrode layer 2, the first reaction prevention layer 3, and the electrolyte layer 4 stacked thereon was measured under a pressure of 0.2 MPa, the He leakage amount was below the lower detection limit (1.0 mL/min·cm²). That is to say, compared with the amount of He leakage when layers up to the first reaction prevention layer 3 were stacked, the amount of He leakage when the electrolyte layer 4 was stacked was significantly smaller and below the detection limit. Therefore, it was confirmed that the formed electrolyte layer 4 was dense, had high gas barrier performance, and of good quality.

Next, an organic binder and an organic solvent (dispersion medium) were added to a fine powder of GDC to manufacture a paste. Using that paste, the second reaction prevention layer 5 was formed on the electrolyte layer 4 by screen printing. Thereafter, the formed solid oxide electrolysis cell E was subjected to a calcination treatment at 1000°C to form the second reaction prevention layer 5 (the second reaction prevention layer formation step).

Next, as an example, a GDC powder, an LSCF powder, and a PMMA powder (particle diameter: 2 pm) serving as a pore-forming material were mixed (the mixing ratio (by mass) of the pore-forming material to the GDC powder + LSCF powder was 3.3%), and an organic binder and an organic solvent (dispersion medium) were added to manufacture a paste. Using that paste, the counter electrode layer 6 was formed on the second reaction prevention layer 5 by screen printing. Finally, the solid oxide electrolysis cell E on which the counter electrode layer 6 was formed was fired at 900°C to burn off the pore-forming material (the counter electrode layer formation step).

In addition, as a comparative example, after the second reaction prevention layer 5 was formed in the same manner as above, a GDC powder and an LSCF powder were mixed, and an organic binder and an organic solvent (dispersion medium) were added to manufacture a paste, and using this paste, the counter electrode layer 6 was formed on the second reaction prevention layer 5 by screen printing. Thereafter, the solid oxide electrolysis cell E on which the counter electrode layer 6 was formed was fired at 900°C.

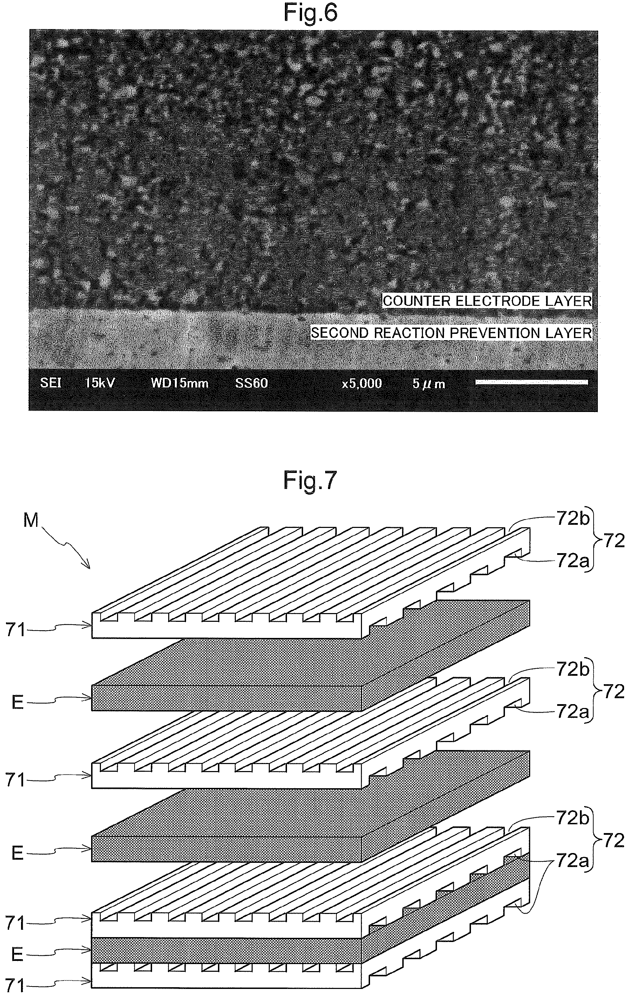

FIGS. 4 and 5 are SEM images obtained by photographing a vertical cross section of the solid oxide electrolysis cell E according to the example. FIG. 6 is an SEM image obtained by photographing a vertical cross section of the solid oxide electrolysis cell E according to the comparative example. As is clear from FIGS. 4 to 6, by using a pore-forming material when forming the counter electrode layer 6, it is possible to form the counter electrode layer 6 with pores each having an area of 0.75 µm² or more. The first porosity, the second porosity, and the third porosity of the solid oxide electrolysis cell E according to the example were 10.5%, 22.5%, and 12.0%, respectively. On the other hand, the first porosity, the second porosity, and the third porosity of the solid oxide electrolysis cell E according to the comparative example were 0%, 15.2%, and 15.2%, respectively. Note that each porosity was calculated by processing the SEM images above.

Next, an electrolysis test was carried out on each of the solid oxide electrolysis cells according to the example and comparative example manufactured as described above by applying a voltage (1.3 V) close to the thermal neutral point. As a result, in the solid oxide electrolysis cell according to the example, no peeling of the counter electrode layer 6 was observed even when a voltage of 1.3 V was applied. In contrast, in the solid oxide electrolysis cell according to the comparative example, the counter electrode layer 6 was peeled off when a voltage of 1.3 V was applied. Thus, it was confirmed that when the counter electrode layer 6 has pores each having an area of 0.75 µm² or more, the counter electrode layer 6 can be prevented from peeling even when a voltage near the thermal neutral point is applied.

### Other Embodiments

[1] In the above embodiment, each solid oxide electrolysis cell E includes the first reaction prevention layer 3 and the second reaction prevention layer 5. However, the present invention is not limited to such a configuration, and each solid oxide electrolysis cell E may include no first reaction prevention layer 3 and/or no second reaction prevention layer 5. In this case, for example, the solid oxide electrolysis cell E is in a state in which the electrolyte layer 4 is formed on the electrode layer 2 or in a state in which the counter electrode layer 6 is formed on the electrolyte layer 4.
[2] In the above embodiment, the metal support 1 is made of a metal plate that has been subjected to hole processing, but the present invention is not limited to such a configuration. For example, the metal support 1 may not be provided, or the metal support 1 may be made of a porous body obtained by sintering metal powder.
[3] In the above embodiment, a plurality of solid oxide electrolysis cells E are combined and used as the solid oxide electrolysis module M. However, the present invention is not limited to such a configuration, and one solid oxide electrolysis cell E may be used alone.
[4] In the above embodiment, the energy system Z includes an exhaust heat utilization unit that reuses the heat discharged from the electrochemical device Y, but the present invention is not limited to such a configuration, and the energy system Z may include no exhaust heat utilization unit.
[5] In the above embodiment, the counter electrode layer 6 is an oxygen evolution electrode , but the present invention is not limited to such a configuration, and the electrode layer 2 may be an oxygen evolution electrode . In this case, the electrode layer 2 is formed so as to have pores each having an area of 0.75 µm² or more in a vertical cross section, steam or carbon dioxide is supplied to the counter electrode layer 6 side, and a voltage is applied between the electrode layer 2 and the counter electrode layer 6. As a result, electrons e⁻ react with water H₂O and carbon dioxide molecules CO₂ in the counter electrode layer 6 so that hydrogen H₂, carbon monoxide CO, and oxygen ions O²⁻ are generated. The oxygen ions O²⁻ move through the electrolyte layer 4 to the electrode layer 2, and oxygen ions O²⁻ release electrons in the electrode layer 2 to become oxygen O₂, and the oxygen O₂ is released from the electrode layer 2.
[6] In the above embodiment, the solid oxide electrolysis module M includes a solid oxide electrolysis cell E in which a cylindrical support is formed with the metal support 1 and the U-shaped member 9 attached to the back surface of the metal support 1, but the present invention is not limited to such a configuration. For example, as shown in FIG. 7, the solid oxide electrolysis module M may be formed by stacking solid oxide electrolysis cells E with inter-cell connection members 71 interposed therebetween.

In this case, each inter-cell connection member 71 is a plate-like member that is conductive and does not have gas permeability, and has grooves 72 formed on the front and back surfaces thereof so as to be perpendicular to each other. Note that the inter-cell connection members 71 can be made of a metal such as stainless steel or a metal oxide.

When the solid oxide electrolysis cells E are stacked with this inter-cell connection members 71 interposed therebetween, gas can flow through the grooves 72, making it possible to supply gas to, and collect gas from, the solid oxide electrolysis cells E. Specifically, the grooves 72 formed on one surface serve as first gas flow paths 72a through which oxygen released from the front side of the solid oxide electrolysis cells E, i.e., from the counter electrode layers 6, flows. The grooves 72 formed on the other surface serve as second gas flow paths 72b, through which steam and carbon dioxide are supplied from the back side of the solid oxide electrolysis cells E, i.e., the back surfaces of the metal supports 1, to the electrode layers 2 through the through holes 1a.

In the solid oxide electrolysis module M with such a configuration, by supplying steam and carbon dioxide to the second gas flow paths 72b and applying a voltage between the electrode layers 2 and the counter electrode layers 6, an electrolysis reaction progresses, generating hydrogen and carbon monoxide on the electrode layers 2 side, and these generated gases flow through the second gas flow paths 72b. In addition, oxygen is released from the counter electrode layers 6, and this released oxygen flows through the first gas flow paths 72a.

Note that the grooves 72 formed on the front surface and the back surface of the inter-cell connection members 71 may be parallel to each other.

[7] In the above embodiment, each solid oxide electrolysis cell E has mainly a flat plate shape or a cylindrical flat plate shape, but is not limited to such a configuration, and each solid oxide electrolysis cell E may have a cylindrical shape.

[8] In the above embodiment, the electrochemical device Y includes the solid oxide electrolysis module M having a plurality of solid oxide electrolysis cells E, but the present invention is not limited to such a configuration. For example, the electrochemical device may include a single solid oxide electrolysis cell E.

The configuration disclosed in the embodiments (including the other embodiments, the same applies below) described above can be applied in combination with configurations disclosed in the other embodiments as long as no contradiction arises. Also, the embodiments disclosed in this specification are illustrative, embodiments of the present invention are not limited to the disclosed embodiments, and appropriate modifications can be made without departing from the object of the present invention.

### Description of Reference Signs

1: Metal Support
2: Electrode Layer (Second Electrode Layer)
3: First Reaction Prevention Layer
4: Electrolyte Layer
5: Second Reaction Prevention Layer
6: Counter Electrode Layer (First Electrode Layer)
E: Solid Oxide Electrolytic Cell
M: Solid Oxide Electrolytic Module
Y: Electrochemical Device
Z: Energy System

## Claims

1. A solid oxide electrolysis cell comprising at least: a first electrode layer; a second electrode layer; and an electrolyte layer disposed between the first electrode layer and the second electrode layer,
wherein the first electrode layer has at least a plurality of pores each having an area of 0.75 µm² or more in a vertical cross section thereof.

2. The solid oxide electrolysis cell according to claim 1,
wherein the first electrode layer has, in the vertical cross section thereof, at least a 10 pm square region in which three or more pores each having an area of 0.75 µm² or more are present.

3. The solid oxide electrolysis cell according to claim 1,
wherein the pores each having an area of 0.75 µm² or more in the first electrode layer are pores each having a diameter of 0.5 pm or more.

4. The solid oxide electrolysis cell according to claim 1,
wherein the first electrode layer has, in the vertical cross section thereof, at least a pore having an area of 0.04 µm² or less.

5. The solid oxide electrolysis cell according to claim 4,
wherein the pore having an area of 0.04 µm² or less in the first electrode layer is a pore having a diameter of 0.1 pm or less.

6. The solid oxide electrolysis cell according to claim 1,
wherein the first electrode layer has a vertical cross section in which a first porosity regarding the pores each having an area of 0.75 µm² or more is not less than 5% and less than 20%.

7. The solid oxide electrolysis cell according to claim 4,
wherein the first electrode layer has a vertical cross section in which a second porosity regarding the pores each having an area of 0.75 µm² or more and the pore having an area of 0.04 µm² or less is not less than 10% and not more than 40%.

8. The solid oxide electrolysis cell according to claim 1,
wherein the first electrode layer contains at least a plurality of particles having a particle diameter of 0.1 pm or less.

9. The solid oxide electrolysis cell according to claim 1,
wherein the first electrode layer is an oxygen evolution electrode .

10. The solid oxide electrolysis cell according to claim 1,
wherein a reaction prevention layer is disposed between the first electrode layer and the electrolyte layer.

11. The solid oxide electrolysis cell according to claim 1,
wherein the electrolyte layer contains an oxide-ion conductor.

12. The solid oxide electrolysis cell according to claim 1, comprising a metal support.

13. A method for manufacturing the solid oxide electrolysis cell according to any one of claims 1 to 12,
wherein a pore-forming material is used in a process of forming the first electrode layer.

14. A method for manufacturing the solid oxide electrolysis cell according to any one of claims 1 to 12,
wherein a processing temperature for all processes is 1100°C or less.

15. A solid oxide electrolysis module in which a set of a plurality of solid oxide electrolysis cells according to any one of claims 1 to 12 are arranged.

16. An electrochemical device comprising at least: the solid oxide electrolysis cell according to any one of claims 1 to 12; and a fuel converter that converts a gas containing a reducing component generated by the solid oxide electrolysis cell.

17. An electrochemical device comprising at least: the solid oxide electrolysis module according to claim 15; and a fuel converter that converts a gas containing a reducing component generated by the solid oxide electrolysis module.

18. An electrochemical device comprising at least: the solid oxide electrolysis cell according to any one of claims 1 to 12; and a power converter that distributes power to the solid oxide electrolysis cell.

19. An electrochemical device comprising at least: the solid oxide electrolysis module according to claim 15; and a power converter that distributes power to the solid oxide electrolysis module.

20. An energy system comprising at least: the electrochemical device according to claim 16; and an exhaust heat utilization unit that reuses heat discharged from the electrochemical device.
